# EUROPEAN PATENT APPLICATION

(11) **EP 4 830 878 A1**
(43) Date of publication of application: **28.10.2026**
(21) Application number: 24908366.8
(22) Date of filing: 18.12.2024
(51) Int. Cl.: B25J 9/16, B62D 57/032

(54) **CONTROL METHOD FOR BLIND WALKING OF ROBOT HAVING PLURALITY OF LEGS, AND ROBOT THEREOF**

(30) Priority: 18.12.2023 KR 20230184047
(71) Applicant: Rainbow Robotics Inc., Sejong-si 30141 (KR)
(72) Inventor: JEONG, Hyo Bin, Daejeon 34049 (KR)
(74) Representative: Viering, Jentschura & Partner mbB Patent- und Rechtsanwälte
(86) International application number: PCT/KR2024/097152
(87) International publication number: WO 2025/136062

(57) **Abstract**

The present invention relates to a blind walking control method of a multi-legged walking robot and a robot using same, wherein the method includes the steps of: swinging a first leg toward a first touch-down position according to a trajectory determined on the basis of a flat ground; controlling a swing operation of the first leg so that the first leg lands on a second touch-down position different from the first touch-down position when a change in topography is detected during the swing operation of the first leg; configuring topography information including the second touch-down position; and determining a trajectory for a swing operation of a second leg following the first leg on the basis of the configured topography information.

## Description

### TECHNICAL FIELD

The present invention relates to a control method for blind walking that allows a robot having a plurality of legs to walk without using vision sensor information.

### BACKGROUND ART

Robots mean multifunctional manipulators designed to perform specific operations, works, and the like through programmed variable motions. The robots are widely used in various industries, including manufacturing, transportation, exploration, healthcare, surveillance, patrolling, and the like.

Although robots may be configured to be physically fixed at a specific location like industrial robot arms, they may also be configured to be able to move as one or more legs or wheels are provided. Mobile robots may be further widely utilized and applied compared to stationary robots.

A representative example of the mobile robot is a multi-legged robot having one or more legs. The multi-legged robot should not step on or collide with obstacles as much as possible while moving, and a walking control technique is required to stably maintain the balance and speed of the robot while avoiding contact with obstacles.

### SUMMARY OF THE INVENTION

### TECHNICAL PROBLEM

Therefore, the present invention has been made in view of the above problems, and it is an object of the present invention to provide a blind walking control method of a multi-legged walking robot and a robot using same, which allows a robot having a plurality of legs to walk stably without using vision sensor information.

The technical problems of the present invention are not limited to those mentioned above, and unmentioned other technical problems will be clearly understood by those skilled in the art from the following description.

### TECHNICAL SOLUTION

To accomplish the above object, according to one aspect of the present invention, there is provided a blind walking control method of a multi-legged walking robot, the method comprising the steps of: swinging a first leg toward a first touchdown position along a trajectory determined on the basis of a flat ground; controlling a swing operation of the first leg so that the first leg may land at a second touchdown position different from the first touchdown position when a change in terrain is detected during the swing operation of the first leg; configuring terrain information including the second touchdown position; and determining a trajectory for a swing operation of a second leg following the first leg on the basis of the configured terrain information.

At least part of the blind walking control method of a multi-legged walking robot may be implemented as a computer-readable recording medium that records a program to be executed on a computer, and may be provided as the program itself.

Meanwhile, the blind walking control method of a multi-legged walking robot may be performed by a multi-legged walking robot according to an embodiment of the present invention.

In addition, the multi-legged walking robot according to an embodiment of the present invention comprises: a processor; a memory for loading a computer program executed by the processor; and a storage for storing the computer program, wherein the computer program includes instructions for executing an operation of swinging a first leg toward a first touchdown position along a trajectory determined on the basis of a flat ground, an operation of controlling a swing operation of the first leg so that the first leg may land at the first touchdown position and a second touchdown position when a change in the terrain is detected during the swing operation of the first leg, an operation of configuring terrain information including the second touchdown position, and an operation of determining a trajectory for a swing operation of the second leg following the first leg on the basis of the configured terrain information.

### ADVANTAGEOUS EFFECTS

According to an embodiment of the present invention, when a multi-legged walking robot performs blind walking without using vision sensor information, and a change in the terrain is detected while the robot is moving along a trajectory determined on the basis of a flat ground, as a swing trajectory is determined by applying blind walking control to the leading leg and applying terrain information acquired through the blind walking control to the trailing leg, an environment where unstable operation of the robot occurs is not repeated, and accordingly, more stable blind walking is allowed.

The technical effects of the present invention are not limited to those mentioned above, and unmentioned other technical effects will be clearly understood by those skilled in the art from the following description.

### BRIEF DESCRIPTION OF THE DRAWINGS

FIG. 1 is a view showing exemplary shapes of a multi-legged walking robot having a plurality of legs according to an embodiment of the present invention.
FIG. 2 is a view for explaining an embodiment of a swing operation of a leg for walking of a multi-legged walking robot.
FIG. 3 is a flowchart illustrating a blind walking control method of a multi-legged walking robot according to an embodiment of the present invention.
FIGS. 4 to 9 are views showing embodiments of a method of controlling blind walking of a multi-legged walking robot.
FIGS. 10 to 13 are views for explaining embodiments of terrain information configured according to movement of a multi-legged walking robot and a swing operation of legs according thereto.
FIG. 14 is a block diagram showing the configuration of a multi-legged walking robot according to an embodiment of the present invention.

### DETAILED DESCRIPTION OF THE INVENTION

Hereinafter, embodiments of the present invention will be described in detail with reference to the accompanying drawings. Advantages and features of the present invention and methods for achieving them will become apparent with reference to the embodiments described below in detail, together with the accompanying drawings. However, the technical spirit of the present invention is not limited to the embodiments and may be implemented in various different forms, and the embodiments are provided only to complete the technical spirit of the present invention and to fully inform those skilled in the art of the scope of the present invention, and the technical spirit of the present invention is defined only by the scope of the claims.

In adding reference numerals to components of each drawing, it should be noted that the same symbols are given the same components as much as possible although they are shown in different drawings. In addition, in describing the present invention, when it is determined that a specific description of a related known configuration or function may obscure the gist of the present invention, the detailed description will be omitted.

Unless defined otherwise, all terms (including technical and scientific terms) used in this specification may be used in a meaning that can be commonly understood by those skilled in the art. In addition, terms defined in generally used dictionaries are not ideally or excessively interpreted unless explicitly specifically defined. The terms used in this specification are for describing the embodiments and are not intended to limit the present invention. In this specification, singular forms also include plural forms unless specifically stated in the phrases.

In addition, in describing the components of the present invention, terms such as first, second, A, B, (a), (b), and the like may be used. These terms are intended only to distinguish the components from other components, and the nature, order, sequence, and the like of the components are not limited by the terms. When it is described that a component is "connected," "combined," or "coupled" to another component, it should be understood that the component may be directly connected or coupled to another component, but other components may also be "connected," "combined," or "coupled" between the components.

Hereinafter, some embodiments of the present invention will be described in detail with reference to the accompanying drawings.

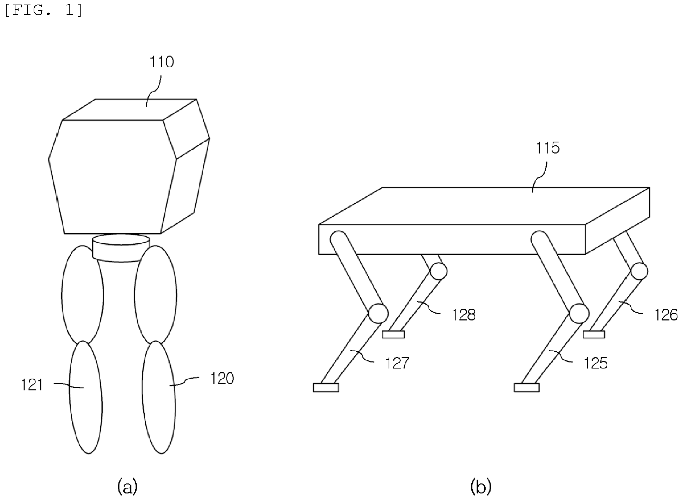

FIG. 1 is a schematic view showing exemplary shapes of a multi-legged walking robot having a plurality of legs according to an embodiment of the present invention.

Referring to FIG. 1, the robot 100 is a robot capable of walking, and may be a humanoid robot having two legs as shown in FIG. 1(a) or a quadruped robot having four legs as shown in FIG. 1(b).

However, the scope of the present invention is not limited to the shapes of the robot shown in FIG. 1. For example, the robot 100 may have three, five, or more legs, and may have various shapes, in addition to the humanoid robot or the quadruped robot.

Referring to FIG. 1(a), the robot 100 may include a main body 110 and two legs 120 and 121, and each leg 120 or 121 is combined with the main body 110 and may have an upper part and a lower part separated by a leg joint.

Meanwhile, referring to FIG. 1(b), the robot 100 may include a main body 115 and four legs 125, 126, 127, and 128, and each leg 125, 126, 127, or 128 is combined with the main body 110, and may have an upper part and a lower part separated by a leg joint.

For example, the robot 100 may further include one or more attachments, such as an articulated arm arranged on the main body 110 or 115 and configured to be movable with respect to the main body 110 or 115. One or more tools, such as a gripper for grasping or holding objects, may be provided at the end of the articulated arm.

Although the robot 100 may include a vision system provided with an imaging sensor or a camera, and for example, one or more cameras and one or more two-dimensional or three-dimensional LiDAR sensors may be mounted on the robot 100, the present invention is not limited thereto.

Each sensor or camera mounted on the robot 100 collects image data or sensor data of the environment and terrain around the robot 100. The vision system may pan or tilt the camera to move the sight of the robot 100 in a predetermined direction. The image data or sensor data collected by the cameras or sensors of the vision system may be provided to the central processing unit of the robot 100.

In addition, the robot 100 may additionally be provided with sensors for measuring the dynamic state of the robot, in addition to the vision sensors such as the camera and LiDAR sensor described above.

For example, the dynamic state of the robot 100 may include the inertia of the robot, the angle of each joint, force, posture, position or state, velocity or acceleration of each component connected to the joint, center of gravity of the robot, and the like.

In order to measure the dynamic state of the robot 100 as described above, the robot 100 may include an Inertial Measurement Unit (IMU) sensor for measuring inertia, an angle sensor for measuring the angle of a joint, a current sensor for measuring the force of a joint, and the like, but the present invention is not limited thereto.

The robot 100 walks by swinging each leg along a pre-planned trajectory. The swing cycle of the leg includes a lifting phase and a touchdown phase. The lifting phase means a period from the point of lifting the leg touching the ground surface until the leg reaches the highest point of the swing trajectory, and the touchdown phase means a period from the highest point of the swing trajectory until the leg descends and lands (or touches down) on the ground surface.

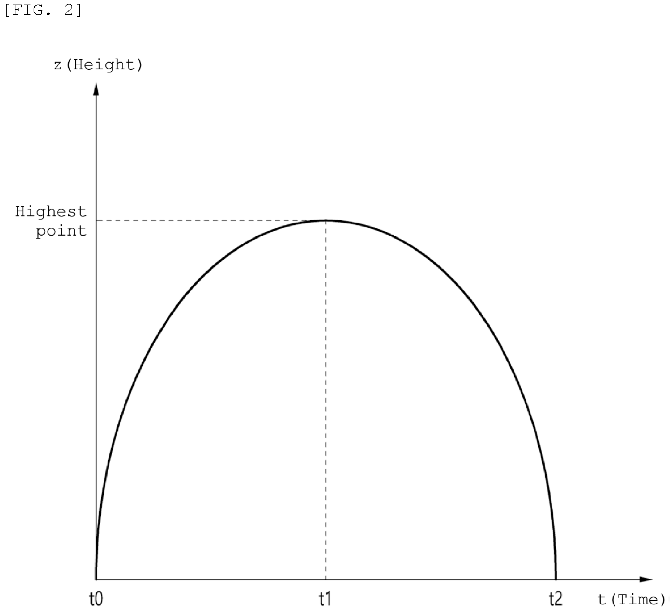

Referring to FIG. 2, the swing cycle of the leg when the robot walks is shown. The swing cycle of the leg begins at time t0, i.e., when the leg is landed on the ground surface, and ends at t2 when the leg passes through t1, i.e., the time point when the leg swings and reaches the peak, and lands on the ground surface again.

At this point, the period from t0 to t1, i.e., when the leg is lifted from the ground surface and reaches the highest point, is the lifting phase, and the period from t1 to t2, i.e., when the leg descends from the highest point and lands back on the ground surface, is the touchdown phase.

The robot 100 according to an embodiment of the present invention may perform blind walking, i.e., walking based only on the dynamic state of the robot 100 without using vision sensors such as a camera and a LiDAR sensor.

Although the blind walking may be performed when the robot 100 is not equipped with a vision system such as a camera or a LiDAR sensor, the present invention is not limited thereto, and may also be performed when walking using vision sensors is difficult according to the surrounding situations even when the robot 100 is equipped with a vision system.

According to an embodiment of the present invention, when a multi-legged walking robot 100 performs blind walking without using vision sensor information, and a change in the terrain is detected while the robot 100 is moving along a trajectory determined on the basis of a flat ground, as a swing trajectory is determined by applying blind walking control to the leading leg and applying terrain information acquired through the blind walking control to the trailing leg, an environment where unstable operation of the robot occurs is not repeated, and accordingly, more stable blind walking is allowed.

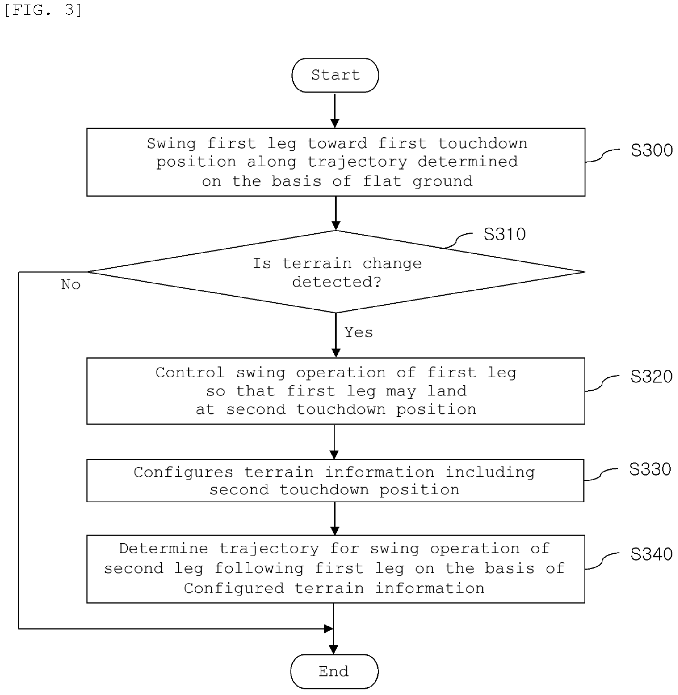

Hereinafter, embodiments of a blind walking control method of a multi-legged walking robot according to the present invention will be described in more detail with reference to FIGS. 3 to 9.

FIG. 3 is a flowchart illustrating a blind walking control method of a multi-legged walking robot according to an embodiment of the present invention.

Referring to FIG. 3, the robot 100 swings a first leg toward a first touchdown position along the trajectory determined on the basis of a flat ground (step S300).

When the robot 100 performs blind walking, the walking trajectory may be controlled on the basis of a flat ground assuming that the terrain is flat.

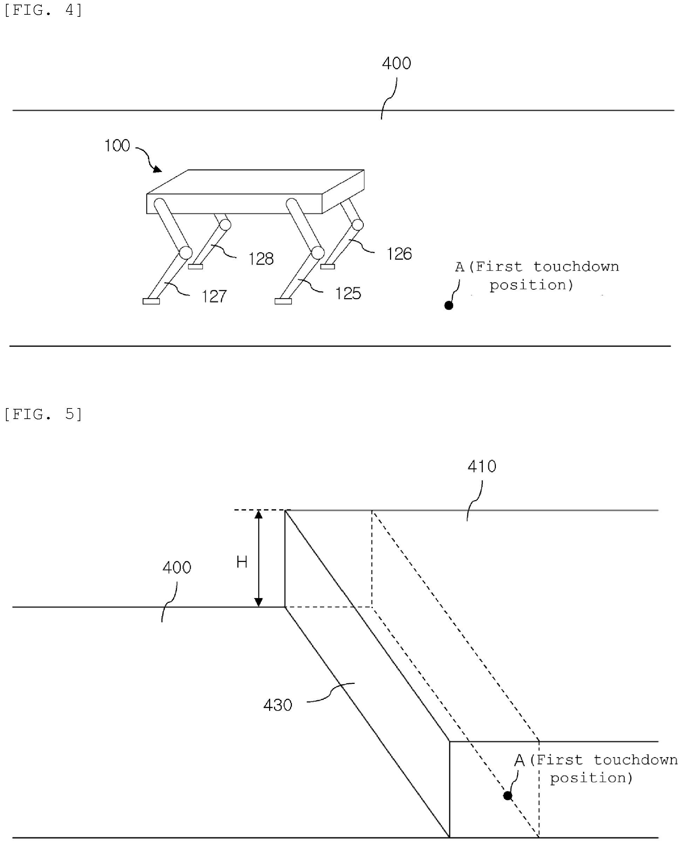

For example, as shown in FIG. 4, a first touchdown position (A), which is the landing position of the first leg 125 of the robot 100, may be determined under the assumption that the terrain of the ground surface 400 on which the robot 100 walks is flat.

Meanwhile, after the first leg 125 of the robot 100 is landed at the first touchdown position (A), a trailing second leg 127 may swing and land, and the touchdown position of landing the second leg 127 may also be determined under the assumption that the terrain of the ground surface 400 is flat.

Here, a third leg 126 may swing together with the second leg 127, and the touchdown position of landing the third leg 126 may also be determined on the basis of a flat ground.

In addition, a fourth leg 128 may swing together with the first leg 125, and the touchdown position of landing the fourth leg 128 may also be determined on the basis of a flat ground.

The swing operation and trajectory of the robot 100 described with reference to FIG. 4 are an example for explaining the blind walking, and the present invention is not limited thereto, and the swing sequence or the like of the legs 125, 126, 127, and 128 may be changed.

When a change in the terrain is detected during the swing operation of the first leg (step S310), the swing operation of the first leg is controlled so that the first leg may land at a second touchdown position different from the first touchdown position (step S320).

Meanwhile, when a change in the terrain is not detected at step S310, the other trailing legs also swing according to the landing position determined on the basis of a flat ground, and the robot 100 may walk.

The change in the terrain detected at step S310 may include at least one among a change in the height and a change in the slope of the ground surface on which the robot 100 walks.

For example, as shown in FIG. 5, on the terrain on which the robot 100 is walking, there may be a second ground surface 410 that is higher than the first ground surface 400 which is a flat ground, and an inclined surface 530 may be formed between the first ground surface 400 and the second ground surface 410.

In this case, due to the difference in the height (H) between the first ground surface 400 and the second ground surface 410, the first touchdown position (A), which is the landing position of the first leg 125 determined on the basis of a flat ground, is located below the ground surface, and accordingly, the first leg 125 of the robot 100 may collide with the second ground surface 410 before landing at the first touchdown position (A).

In this way, when an impact generated by the collision with the second ground surface 410 is detected before the first leg 125 lands at the first touchdown position (A), it can be determined that the terrain of the ground surface on which the robot 100 walks has been changed.

For example, at step S310, an impact applied to the first leg 125 may be detected on the basis of the dynamic state of the robot 100 measured in the touchdown phase of the first leg 125, and the dynamic state of the robot 100 may include at least one among information on the inertia of the robot, information on the angle of the joint, and information on the force of the joint.

Specifically, while the robot 100 is walking, the inertia of the robot may be measured by an IMU sensor, and the force of each joint may be measured through a current sensor together with the angle of each joint, and the impact applied when the first leg 125 contacts the second ground surface 410 may be detected on the basis of the inertia, and the angle and force of the joint measured as described above in the process of the first leg 125 landing at the first touchdown position (A).

When an impact according to the change in the terrain as described above is detected while the robot 100 controls the walking trajectory on the basis of a flat ground, a blind walking control algorithm is applied so that a change in the height or a change in the slope of a predetermined range may be overcome, and the legs may land at a new touchdown position.

For example, when an impact is detected before the first leg 125 of the robot 100 lands at the first touchdown position (A), the position may be determined as a new touchdown position considering the position of detecting the impact and the dynamic state of the robot 100.

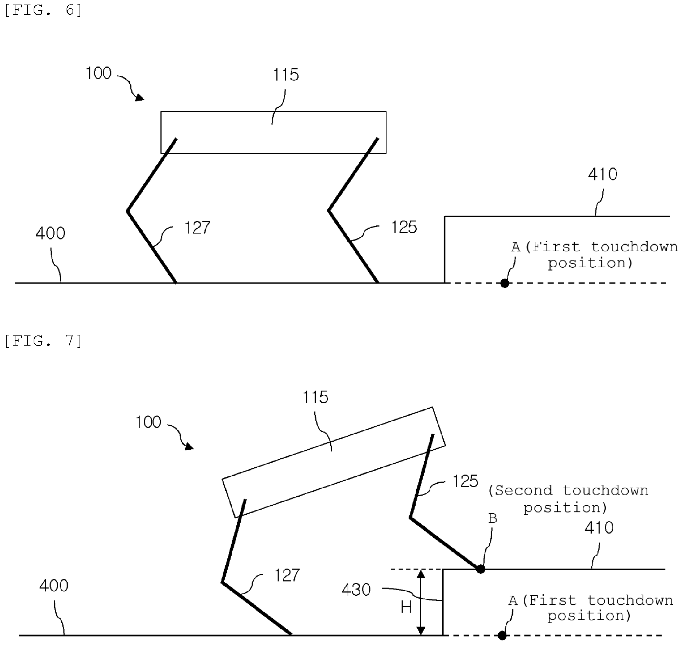

Referring to FIG. 6, when the robot 100 is walking on the first ground surface 400 which is a flat ground, the first touchdown position (A), which is the next landing position of the first leg 125, is set on the basis of a flat ground, and the first touchdown position (A) may be located below the second ground surface 410 which is higher than the first ground surface 400.

Referring to FIG. 7, as the first leg 125 swings toward the first touchdown position (A) and lands thereon, the first leg 125 collides with the second ground surface 410 due to the difference in the height (H), and accordingly, an impact may be detected on the basis of the dynamic state of the robot 100 as described above.

At this point, when the height (H) of the second ground surface 410 is lower than a predetermined height, the difference in the height (H) is overcome according to the blind walking control algorithm, and the landing position of the first leg 125 may be changed from the previously set first touchdown position (A) to the second touchdown position (B) on the second ground surface 410.

When the first leg 125 lands at the second touchdown position at step S320, the robot 100 configures terrain information including the second touchdown position (step S330).

At step S330, the terrain information may include three-dimensional coordinate information of the second touchdown position, and the three-dimensional coordinate information may indicate the second touchdown position in the internal coordinate system of the robot.

Meanwhile, the terrain information is configured in the form of a virtual map in the internal coordinate system of the robot to include information on the positions where the legs land while the robot 100 walks, and stored in the memory, and may be utilized later to control the walking trajectory of the robot 100.

To this end, three-dimensional coordinate information corresponding to each of the landing positions of the first leg 125 is collected while the robot 100 is walking, and coordinate information on the terrain on which the robot 100 walks is generated by interpolating adjacent landing positions of the first leg 125 according to the collected three-dimensional coordinate information, and the coordinate information of the generated terrain may be stored in the memory.

That is, as the adjacent landing positions sequentially collected are interpolated and connected to each other as described above, information on the terrain on which the robot 100 is walking may be generated as a virtual map.

Thereafter, the robot 100 determines a trajectory for the swing operation of the second leg following the first leg on the basis of the terrain information configured at step S330 (step S340).

For example, the landing position of the second leg may be determined as the third touchdown position on the basis of a flat ground, and when a change in the terrain is detected in the preceding touchdown phase of the first leg and the landing position of the first leg is changed, the landing position of the second leg may be changed from the existing third touchdown position to the fourth touchdown position.

At this point, in the internal three-dimensional coordinate system of the robot, the third touchdown position of the second leg and the first touchdown position of the first leg determined on the basis of a flat ground have the same height, and the fourth touchdown position, which is a new landing position of the second leg, may be determined to have the same height as the changed second touchdown position of the first leg.

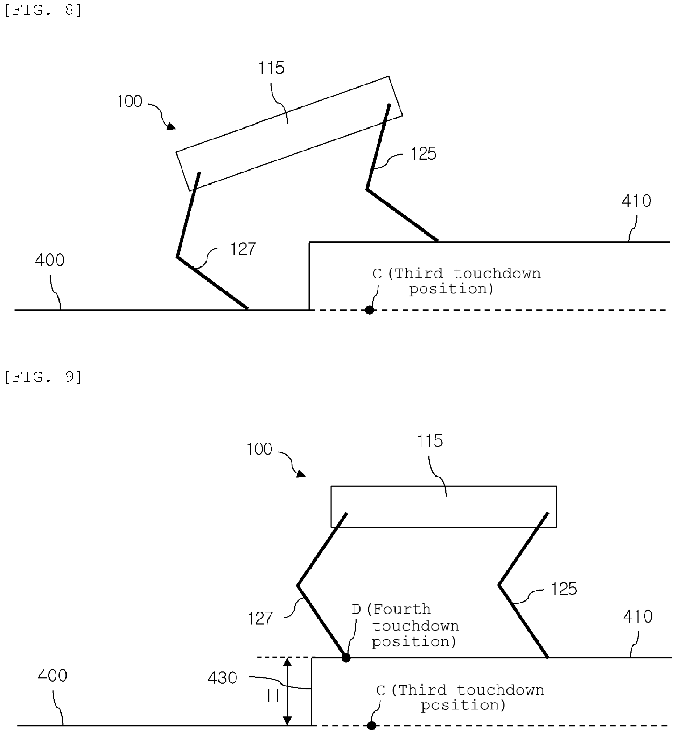

Referring to FIG. 8, while the first leg 125 of the robot 100 is landed on the second ground surface 410, the landing position of the trailing second leg 127 is set to a third touchdown position (C) assuming flat ground, and the third touchdown position (C) may be located below the second ground surface 410.

In this case, on the basis of the terrain information identified from the swing operation of the preceding first leg 125 (e.g., three-dimensional coordinate information on the second touchdown position (B) on the second ground surface 410), the landing position of the second leg 127 may be changed to a fourth touchdown position (D) on the second ground surface 410.

Referring to FIG. 9, as the landing position of the second leg 127 is set in advance to be changed from the third touchdown position (C) to the fourth touchdown position (D) on the second ground surface 410, the second leg 127 may swing toward the fourth touchdown position (D) according to the changed trajectory.

As described above, as the trailing second leg 127 begins the swing operation while the landing position is changed to the fourth touchdown position (D) on the second ground surface 410, the impact according to the collision with the second ground surface 410 generated when the first leg 125 lands is not repeated, and it does not need to repeatedly perform the blind walking control algorithm to overcome the difference in the height (H) of the ground surface.

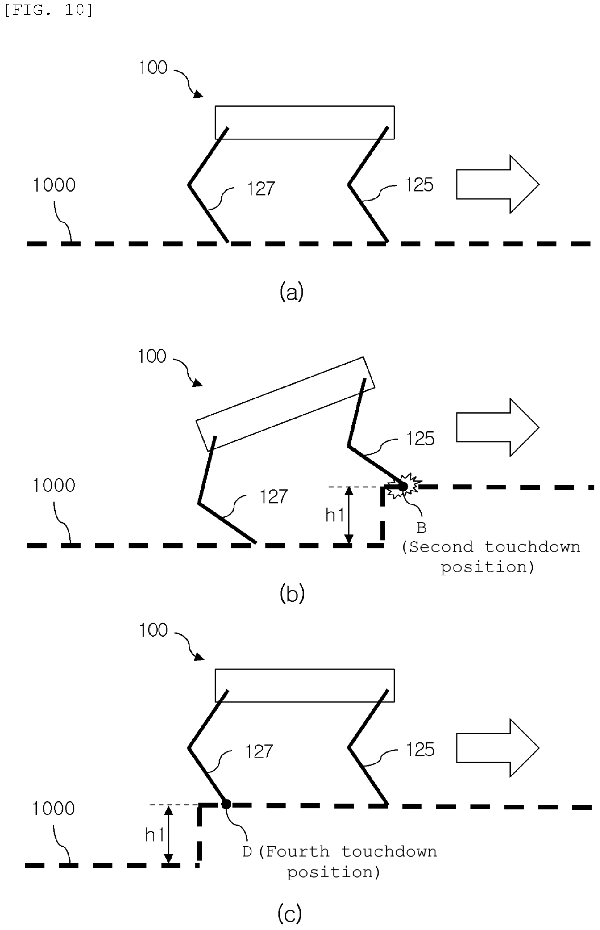

Hereinafter, embodiments of terrain information configured according to movement of a multi-legged walking robot and the swing operation of the legs according thereto will be described in more detail with reference to FIGS. 10 to 13.

Referring to FIG. 10, a virtual map 1000 having three-dimensional coordinates on the internal coordinate system of the robot, representing terrain information, may be generated using the landing positions of the first leg 125 collected while the robot 100 is walking.

Meanwhile, the landing positions of the second leg 127 following the first leg 125 may be determined on the basis of the terrain information according to the virtual map 1000 generated as described above.

Specifically, in the case of FIG. 10(a), the first leg 125 and the second leg 127 of the robot 100 may walk as landing positions are set along a trajectory determined on the basis of a flat ground.

When there is a ground surface as high as a height (h1) within a predetermined range as shown in FIG. 10(b) while the robot 100 is walking, a collision with the high ground surface occurs in the flat ground-based touchdown phase of the first leg 125, and accordingly, the landing position of the first leg 125 may be changed to a second touchdown position (B) on the high ground surface.

In this case, the position and the height (h1) of the ground surface are reflected in the three-dimensional virtual map 1000 according to the changed landing position of the first leg 125, and the landing position of the trailing second leg 127 may be changed on the basis of the virtual map 1000 having the terrain information.

Referring to FIG. 10 (c), the landing position of the second leg 127 may be changed to a fourth touchdown position (D) on the high ground surface according to the terrain information of the virtual map 1000, and the second leg 127 may swing using the fourth touchdown position (D) as the landing position.

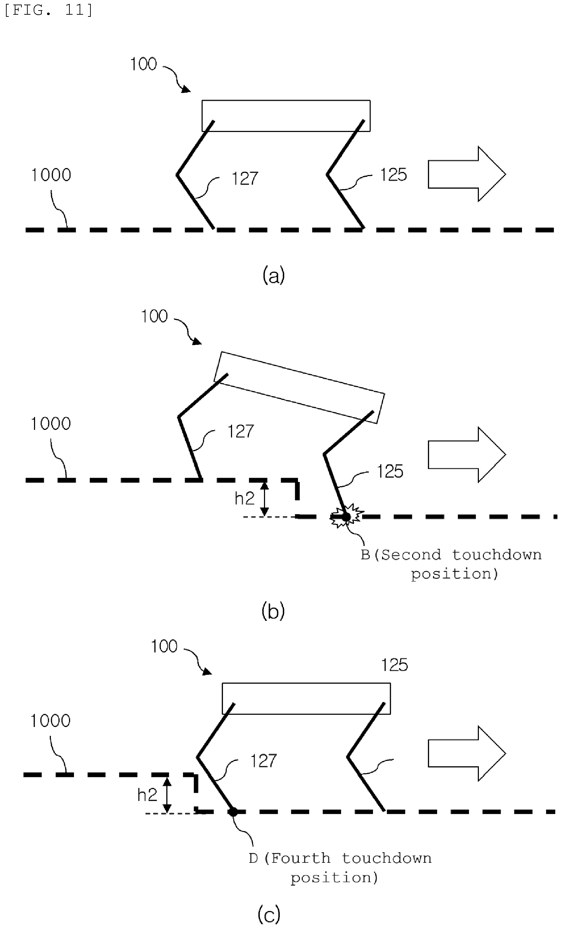

In the case of FIG. 11(a), the first leg 125 and the second leg 127 of the robot 100 may walk as landing positions are set along a trajectory determined on the basis of a flat ground.

When there is a ground surface as low as a depth (h2) within a predetermined range as shown in FIG. 11(b) while the robot 100 is walking, a collision with the low ground surface occurs at a point farther than the first touchdown position (A) set on the basis of a flat ground in the touchdown phase of the first leg 125, and accordingly, the landing position of the first leg 125 may be changed to the second touchdown position (B) on the ground surface.

In this case, the position and the depth (h2) of the ground surface are reflected in the three-dimensional virtual map 1000 according to the changed landing position of the first leg 125, and the landing position of the trailing second leg 127 may be changed on the basis of the virtual map 1000 having the terrain information.

Referring to FIG. 11(c), the landing position of the second leg 127 may be changed to a fourth touchdown position (D) on the low ground surface according to the terrain information of the virtual map 1000, and the second leg 127 may swing using the fourth touchdown position (D) as the landing position.

Meanwhile, the blind walking control method of a multi-legged walking robot according to the present invention may be applied to terrain of a stair shape, as well as terrain of an inclined-surface shape as described above.

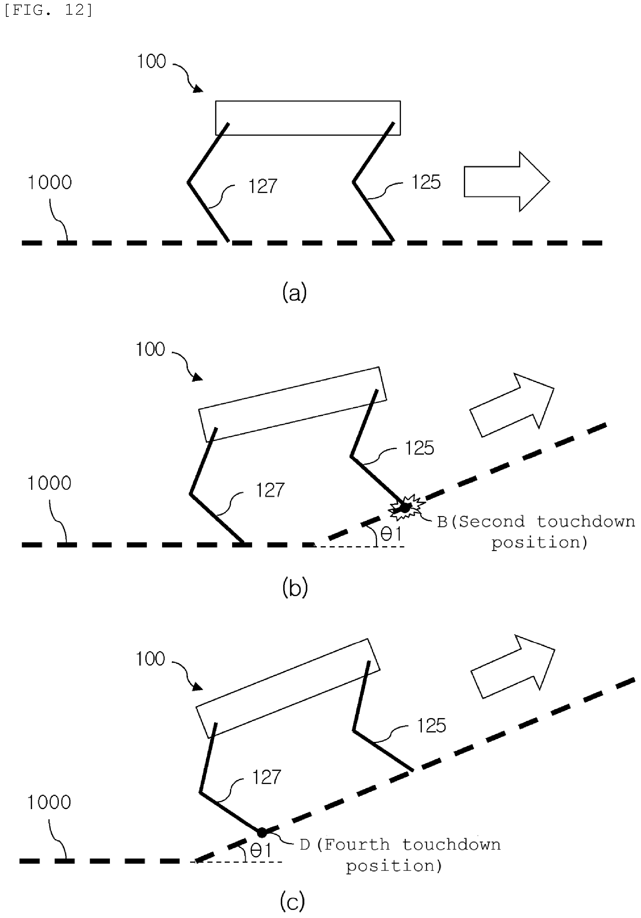

In the case of FIG. 12(a), the first leg 125 and the second leg 127 of the robot 100 may walk as landing positions are set along a trajectory determined on the basis of a flat ground.

When there is an inclined surface ascending as much as an angle (θ1) within a predetermined range as shown in FIG. 12(b) while the robot 100 is walking, a collision with the inclined ground surface occurs in the flat ground-based touchdown phase of the first leg 125, and accordingly, the landing position of the first leg 125 may be changed to a second touchdown position (B) on the inclined ground surface.

Here, the terrain of a stair shape and the terrains of an inclined-surface shape described with reference to FIGS. 10 and FIGS. 11 may be distinguished from each other according to the dynamic state of the robot measured in the touchdown phase of the first leg 125, e.g., the inertia of the robot, the angle of the joints, or the direction of force.

In this case, the position and the inclination angle (θ1) of the ground surface are reflected in the three-dimensional virtual map 1000 according to the changed landing position of the first leg 125, and the landing position of the trailing second leg 127 may be changed on the basis of the virtual map 1000 having the terrain information.

Referring to FIG. 12(c), the landing position of the second leg 127 may be changed to a fourth touchdown position (D) on the inclined ground surface according to the terrain information of the virtual map 1000, and the second leg 127 may swing using the fourth touchdown position (D) as the landing position.

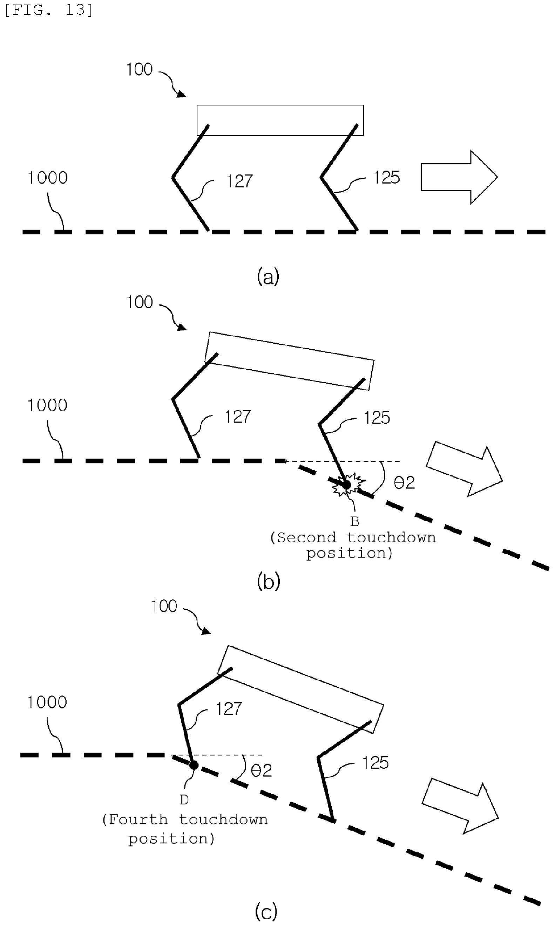

In the case of FIG. 13(a), the first leg 125 and the second leg 127 of the robot 100 may walk as landing positions are set along a trajectory determined on the basis of a flat ground.

When there is an inclined surface descending as much as an angle (θ2) within a predetermined range as shown in FIG. 13(b) while the robot 100 is walking, a collision with the inclined low ground surface occurs at a point farther than the first touchdown position (A) set on the basis of a flat ground in the touchdown phase of the first leg 125, and accordingly, the landing position of the first leg 125 may be changed to the second touchdown position (B) on the descending inclined ground surface.

In this case, the position and the inclination angle (θ2) of the ground surface are reflected in the three-dimensional virtual map 1000 according to the changed landing position of the first leg 125, and the landing position of the trailing second leg 127 may be changed on the basis of the virtual map 1000 having the terrain information.

Referring to FIG. 13(c), the landing position of the second leg 127 may be changed to a fourth touchdown position (D) on the descending inclined ground surface according to the terrain information of the virtual map 1000, and the second leg 127 may swing using the fourth touchdown position (D) as the landing position.

Meanwhile, the terrain information (e.g., the virtual map) configured as described above may be stored in the memory and used thereafter to control the walking trajectory for blind walking of the robot 100.

Specifically, when the robot 100 returns, a trajectory for the swing operation of the leading first leg 125 may also be determined on the basis of the terrain information (e.g., the virtual map) stored in memory, and the trajectory for the swing operation of the other trailing legs may also be determined as described above.

Although a blind walking control method of a multi-legged walking robot according to the present invention applied to terrain of a stair shape and terrain of an inclined-surface shape has been described in the above description with reference to FIGS. 10 to 13, the present invention is not limited thereto and may be applied to blind walking in various rough terrains, such as protruding or sunken terrains, bush terrains, sandy terrains, or snowy terrains.

The blind walking control method of a multi-legged walking robot described with reference to FIGS. 3 to 13 may be performed by a robot according to an embodiment of the present invention. Meanwhile, although it has been described in the embodiments of the present invention as an example that the robot 100 is a quadrupedal walking robot having four legs, the present invention is not limited thereto and may be applied to humanoid robots having two legs as shown in FIG. 1(a) or multi-legged walking robots having three or five or more legs.

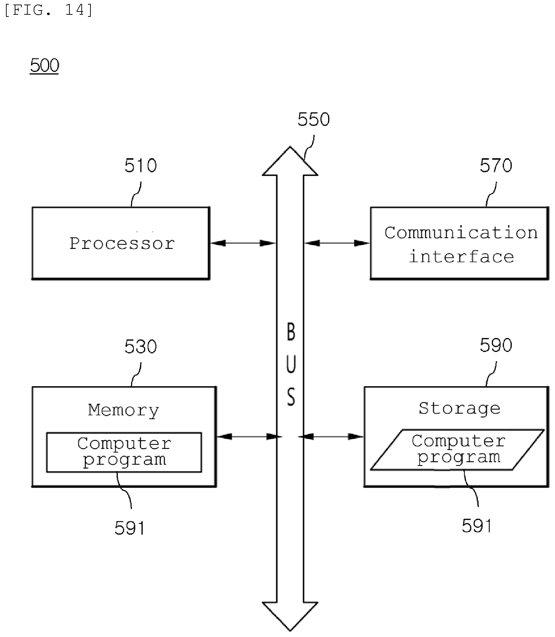

Hereinafter, an exemplary computing device 500, in which the methods described in various embodiments of the present invention are implemented, will be described with reference to FIG. 14. For example, the computing device 500 of FIG. 14 may be implemented as at least some components of a robot according to an embodiment of the present invention.

Referring to FIG. 14, the computing device 500 may include one or more processors 510, a bus 550, a communication interface 570, a memory 530 for loading computer programs 591 executed by the processor 510, and a storage 590 for storing the computer programs 591. However, FIG. 14 only shows components related to the embodiments of the present invention. Therefore, those skilled in the art will understand that other general-purpose components may be included, in addition to the components shown in FIG. 14.

The processor 510 controls the general operation of each component of the computing device 500. The processor 510 may be configured to include at least one among a Central Processing Unit (CPU), a Micro Processor Unit (MPU), a Micro Controller Unit (MCU), a Graphic Processing Unit (GPU), and a processor of any form well known in the art of the present invention. In addition, the processor 510 may perform operations for at least one application or program for executing the methods and/or operations according to various embodiments of the present invention. The computing device 500 may have one or more processors.

The memory 530 stores various types of data, commands and/or information. The memory 530 may load one or more programs 591 from the storage 590 to execute the methods and/or operations according to various embodiments of the present invention. Examples of the memory 530 may be RAM, but are not limited thereto.

The bus 550 provides communication functions between the components of the computing device 500. The bus 550 may be implemented as various forms of buses, such as an address bus, a data bus, and a control bus.

The communication interface 570 supports wired and wireless Internet communication of the computing device 500. The communication interface 570 may also support various communication methods, in addition to the Internet communication. To this end, the communication interface 570 may be configured to include a communication module well known in the technical field of the present invention.

The storage 590 may store one or more computer programs 591 non-temporarily. The storage 590 may be configured to include volatile memory such as Read Only Memory (ROM), Erasable Programmable ROM (EPROM), Electrically Erasable Programmable ROM (EEPROM), flash memory, a hard disk, a removable disk, or any form of computer-readable recording media well known in the art to which the present invention belongs.

The computer program 591 may include one or more instructions, in which the methods and/or operations according to the embodiments of the present invention as described with reference to FIGS. 3 to 13 are implemented.

For example, the computer program 591 may include instructions for executing an operation of swinging a first leg toward a first touchdown position along a trajectory determined on the basis of a flat ground, an operation of controlling the swing operation of the first leg so that the first leg may land at the first touchdown position and the second touchdown position when a change in the terrain is detected during the swing operation of the first leg, an operation of configuring terrain information including the second touchdown position, and an operation of determining a trajectory for the swing operation of the second leg following the first leg on the basis of the configured terrain information.

When the computer program 591 is loaded onto the memory 530, the processor 510 may perform the methods and/or operations according to various embodiments of the present invention by executing the one or more of the instructions.

The methods according to the present invention described above can be manufactured as a program for being executed on a computer and may be stored in a computer-readable recording medium. Examples of the computer-readable recording medium include ROM, RAM, CD-ROM, a magnetic tape, a floppy disk, an optical data storage device, and the like.

The computer-readable recording medium may be distributed to computer systems connected through a network, and computer-readable codes may be stored and executed in a distributed manner. In addition, function programs, codes, and code segments for implementing the method may be easily inferred by programmers in the art.

Although the preferred embodiments of the present invention have been illustrated and described above, the present invention is not limited to the specific embodiments described above, and various modifications may be made by those skilled in the art without departing from the gist of the present invention as claimed in the claims. Furthermore, such modifications should not be individually understood from the technical spirit or prospect of the present invention.

## Claims

1. A blind walking control method of a multi-legged walking robot, the method comprising the steps of:
swinging a first leg toward a first touchdown position along a trajectory determined on the basis of a flat ground;
controlling a swing operation of the first leg so that the first leg may land at a second touchdown position different from the first touchdown position when a change in terrain is detected during the swing operation of the first leg;
configuring terrain information including the second touchdown position; and
determining a trajectory for a swing operation of a second leg following the first leg on the basis of the configured terrain information.

2. The method according to claim 1, wherein the change in the terrain includes at least one among a change in a height and a change in a slope.

3. The method according to claim 1, wherein the step of controlling a swing operation includes the step of detecting an impact applied to the first leg on the basis of a dynamic state of the robot measured in a touchdown phase of the first leg.

4. The method according to claim 3, wherein the dynamic state of the robot includes at least one among information on an inertia of the robot, information on an angle of a joint, and information on a force of the joint.

5. The method according to claim 1, wherein the terrain information includes three-dimensional coordinate information of the second touchdown position.

6. The method according to claim 1, wherein the step of configuring terrain information includes the steps of:
collecting three-dimensional coordinate information corresponding to each of landing positions of the first leg while the robot is walking;
generating coordinate information on the terrain on which the robot walks by interpolating adjacent landing positions of the first leg according to the collected three-dimensional coordinate information; and
storing the generated coordinate information on the terrain.

7. The method according to claim 1, wherein the step of determining a trajectory includes the step of changing a third touchdown position, which is a landing position of the second leg according to a trajectory determined on the basis of a flat ground, to a fourth touchdown position.

8. The method according to claim 7, wherein in a three-dimensional coordinate system, the third touchdown position has the same height as the first touchdown position, and the fourth touchdown position has the same height as the second touchdown position.

9. The method according to claim 1, further comprising the step of determining a trajectory for the swing operation of the first leg on the basis of the configured terrain information when the robot returns.

10. A computer program stored in a computer-readable recording medium in combination with hardware to execute the method of any one of claims 1 to 9.

11. A multi-legged walking robot that performs the method of any one of claims 1 to 9.

12. A multi-legged walking robot comprising:
a processor;
a memory for loading a computer program executed by the processor; and
a storage for storing the computer program, wherein
the computer program includes instructions for executing an operation of swinging a first leg toward a first touchdown position along a trajectory determined on the basis of a flat ground, an operation of controlling a swing operation of the first leg so that the first leg may land at the first touchdown position and a second touchdown position when a change in the terrain is detected during the swing operation of the first leg, an operation of configuring terrain information including the second touchdown position, and an operation of determining a trajectory for a swing operation of the second leg following the first leg on the basis of the configured terrain information.
